(19) Europäisches Patentamt / European Patent Office / Office européen des brevets

(11) **EP 3 309 953 B1**

(12) **EUROPEAN PATENT SPECIFICATION**

(45) Date of publication and mention
of the grant of the patent:
**19.08.2020 Bulletin 2020/34**

(51) Int Cl.:
***H02P 21/16*** *(2016.01)*

(21) Application number: **16807151.2**

(22) Date of filing: **03.02.2016**

(86) International application number:
**PCT/JP2016/053122**

(87) International publication number:
**WO 2016/199444 (15.12.2016 Gazette 2016/50)**

(54) **POWER CONVERSION DEVICE FOR INDUCTION MACHINE, SECONDARY TIME CONSTANT MEASUREMENT METHOD AND SPEED CONTROL METHOD**

ENERGIEUMWANDLUNGSVORRICHTUNG FÜR INDUKTIONSMASCHINE, SEKUNDÄRZEITKONSTANTENMESSVERFAHREN UND GESCHWINDIGKEITSREGELUNGSVERFAHREN

DISPOSITIF DE CONVERSION DE PUISSANCE POUR MACHINE À INDUCTION, PROCÉDÉ DE MESURE DE CONSTANTE DE TEMPS SECONDAIRE ET PROCÉDÉ DE RÉGULATION DE VITESSE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.06.2015 JP 2015119582**

(43) Date of publication of application:
**18.04.2018 Bulletin 2018/16**

(73) Proprietor: **Hitachi Industrial Equipment Systems Co., Ltd.**
**Tokyo 101-0022 (JP)**

(72) Inventors:
• **KAMIYA Akinori**
**Tokyo 100-8280 (JP)**
• **TOBARI Kazuaki**
**Tokyo 100-8280 (JP)**
• **IWAJI Yoshitaka**
**Tokyo 100-8280 (JP)**
• **ONUMA Yusaku**
**Tokyo 101-0022 (JP)**

(74) Representative: **Mewburn Ellis LLP**
**Aurora Building**
**Counterslip**
**Bristol BS1 6BX (GB)**

(56) References cited:
| | |
|---|---|
| **JP-A- H0 843 462** | **JP-A- H07 298 697** |
| **JP-A- H07 298 699** | **JP-A- 2000 342 000** |
| **JP-A- 2001 268 997** | **JP-A- 2001 268 997** |
| **JP-A- 2010 011 638** | **JP-A- 2010 011 638** |

# EP 3 309 953 B1

**Description**

Technical Field

The present invention relates to a power conversion apparatus that is capable of measuring a secondary time constant for an induction machine with high precision.

Background Art

As a technology for measuring a secondary time constant for an induction machine in the related art, there is a scheme that uses a single-phase alternating current excitation which is disclosed in JP-A-6-265607 (PTL 1).

In the scheme that uses the single-phase alternating excitation, a primary side resistance is first measured by direct current excitation, and a resistance sum of a primary side resistance and a secondary side resistance that results from conversion on the primary side is next obtained by the single-phase alternating current excitation. The secondary side resistance is measured by subtracting the primary side resistance from the resistance sum. Then, a control constant is set according to a result of the measurement, and an induction machine is controlled.

Citation List

Patent Literature

PTL 1: JP-A-6-265607

JP 2001 268997 A describes a method for tuning a motor controller comprising a response waveform adopting step of sampling the torque axis voltage reference when the exciting current reference is stepwisely changed during an operation of an induction motor at a constant speed at a shorter sampling period than the secondary time constant of the motor to store the reference in a memory, and a secondary time constant calculating step of obtaining a response waveform time constant from response waveform data stored in the memory in the adopting step and setting the time constant as the secondary time constant.

JP H07 298699 A describes a current control system obtaining voltage commands for exciting current command and torque current command on a two-phase rotating orthogonal coordinate system and a vector control is effected by determining a slip frequency based on the exciting current command, the torque current command and a secondary time constant tau2 of an induction motor.

JP 2010 011 638 A describes a motor drive system provided with a permanent magnet synchronous motor, an inverter circuit which is connected to a DC power supply and drives the permanent magnet synchronous motor, a motor current detecting means detecting a motor current from an output current of the inverter circuit or a bus bar current of a DC-side, and a control means controlling a rotational speed of the permanent magnet synchronous motor by using a motor current detection value.

Summary of Invention

Technical Problem

In the related art, it is not considered that when primary resistance is measured, an error occurs in a measurement value of primary resistance due to a voltage error that results from the dead time for preventing a short circuit in a power converter (inverter) and that when the resistance sum is measured, because an alternating current voltage of tens of Hz is applied, an influence of a skin effect is exerted and an error due to frequency dependency also occurs. Secondary resistance is calculated from information in which these errors are included, and a secondary time constant is obtained by obtaining a ratio between secondary resistance and secondary inductance. Then, the slide of an inductance motor is calculated using the obtained secondary time constant, an arithmetic operation of calculating a primary frequency command is performed, and speed control is performed. Therefore, when the measurement precision of the measured secondary resistance is decreased, there occurs a problem in that the deviation of an actual speed with respect to a speed command is increased. For this reason, the secondary resistance needs to be measured with high precision.

An object of the present invention is to provide a measurement method and an apparatus that are capable of measuring a secondary time constant for an induction machine with high precision and performing speed control in such a manner that the deviation is small with respect to a speed command.

Solution to Problem

In order to solve the problems described above, the present invention is defined in the independent claims 1 and 7.

Advantageous Effects of Invention

According to the present invention, a secondary time constant of an induction machine can be measured with high precision.

Brief Description of Drawings

[Fig. 1] Fig. 1 is a diagram of a configuration of a power conversion apparatus, which illustrates a control configuration in which a secondary time constant in a first embodiment is measured.
[Fig. 2] Fig. 2 is an explanatory diagram illustrating a current command value on a d-axis in the first embodiment.
[Fig. 3] Fig. 3 is an explanatory diagram illustrating an output of a q-axis current control unit when the current command value on the d-axis in the first embodiment is caused to be step-changed.
[Fig. 4] Fig. 4 is a diagram of a configuration of a power conversion apparatus, which illustrates a control configuration in which a secondary time constant in a case where a leakage inductance in a second embodiment is considered is measured.
[Fig. 5] Fig. 5 is a diagram of a configuration of a power conversion apparatus according to a third embodiment, and an explanatory diagram illustrating that a secondary time constant measured is set for vector control that does not use a speed sensor.
[Fig. 6] Fig. 6 is a diagram of a configuration of a power conversion apparatus according to a fourth embodiment, and an explanatory diagram illustrating that switching between a tuning mode and an operating mode is performed.
[Fig. 7] Fig. 7 is a current waveform in U, V, and W phases before and after id* according to the first embodiment is caused to be step-changed.

Description of Embodiments

The present embodiments will be described below with reference to the drawings.

First Embodiment

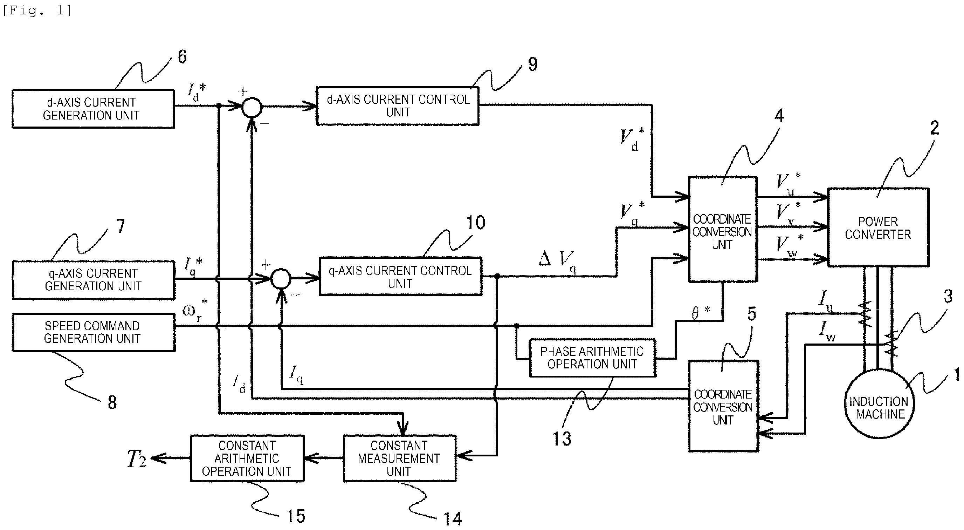

Fig. 1 illustrates a diagram of a configuration of a power conversion apparatus according to the present embodiment. The power conversion apparatus here is configured with a power converter 2 that drives an induction machine 1 and a control device that controls the magnitude of and a frequency of an output voltage of the power converter 2. In Fig. 1, constituents other than the induction machine 1, the power converter 2, and the current detector 3 correspond to the control device.

In Fig. 1, the induction machine 1 generates magnetic flux that occurs due to current of a magnetic flux axis (d-axis) component, and torque due to current of a torque axis (q-axis) component that is orthogonal to a magnetic flux axis . The power converter 2 outputs a voltage value that is proportional to voltage command values Vu*, Vv*, and Vw* for three-phase alternating current, and varies an output voltage value and a rotational frequency value of the induction machine 1. The current detector 3 outputs detection values Iu, Iv, and Iw of alternating current in 3 phases for the induction machine 1. The current detector 3 may detect line current in 2 phases, for example, a U phase and a W phase, among the 3 phases in the induction machine 1, and may obtain line current in a V phase, as Iv = - (Iu + Iw), from an alternating current condition (Iu + Iv + Iw = 0).

A coordinate conversion unit 4 within the control device outputs the voltage command values Vu*, Vv*, and Vw* of the alternating current in 3 phases from voltage command values Vd* and Vq* and a phase estimation value θ*. A coordinate conversion unit 5 outputs current detection values Id and Iq on the d-axis and q-axis from the detection values Iu, Iv, and Iw of the alternating current in 3 phases and from a phase θ*. A d-axis current generation unit 6 outputs a current command value Id* on the d-axis that is of "positive polarity". A q-axis current generation unit 7 outputs a current command value Iq* on the q-axis. A speed command generation unit 8 outputs a speed command ωr*. A d-axis current control unit 9 outputs a voltage command value Vd* on the d-axis from a deviation (Id* - Id) between the current command value Id* on the d-axis and the current detection value Id. A q-axis current control unit 10 outputs a voltage compensation value ΔVq* on the q-axis from a deviation (Iq* - Iq) between the current command value Iq* on the q-axis and the current detection value Iq. A phase arithmetic operation unit 13 performs an integral arithmetic operation of calculating to an output frequency value ωr* and outputs a control phase θ*. A constant measurement unit 14 measures a waveform of an output ΔVq of a q-axis current control unit for retaining. A constant arithmetic operation unit 15 performs an arithmetic operation of calculating a secondary time constant T2 using a least-squares method, from a waveform that is retained in the constant measurement unit 14. It is noted that when it comes to all control of these, control is performed by a control unit that is not illustrated, and that a function of the control device described above, for example, may be performed in software by a microcomputer.

In the present embodiment, the principle that different from that in PTL 1 used for the purpose of measuring the secondary time constant with high precision. The principle will be described below.

First, a predetermined d-axis current command value Id* and a q-axis current command value Iq* that is zero are set in a rotating coordinate system with the d-axis and the q-axis. Based on these current command values Id* and Iq*, the current detection values Id and Iq, and the speed command (ωr*, an arithmetic operation of calculating the voltage command values Vd* and Vq* is performed using (Math. 1).

$$\left[ \begin{array}{l} V_d^* = \Delta V_d \\[2ex] V_q^* = \omega_r^* \cdot L_\sigma \cdot \dfrac{1}{1+T_{ACR} \cdot s} I_d^* + \omega_1^* \cdot \dfrac{M}{L_2} \cdot \phi_{2d} + \Delta V_q \end{array} \right]$$

(Math. 1)

In (Math. 1), φ2d denotes a secondary magnetic flux value on the d-axis, ΔVd denotes an output [V] for current control on the d-axis, ΔVq denotes an output [V] for current control on the q-axis, TACR denotes a current control delay time constant [s], Lσ denotes leakage inductance, M denotes mutual inductance, L2 denotes secondary side self-inductance, s denotes a differential operator, and * denotes a command value. It is noted that, in Fig. 1 relating to the present embodiment, on the assumption of the case where the leakage inductance Lσ is sufficiently low, a configuration is employed in which an arithmetic operation of calculating a non-interference term which denotes a voltage drop corresponding to the leakage inductance Lσ is not in advance performed and which is the first term in an arithmetic operation equation for Vq* in (Math. 1) .

On the other hand, a voltage equation in static states of voltages Vd and Vq on the d-axis and the q-axis for the induction machine 1 is expressed in (Math. 2).

$$\left[ \begin{array}{l} V_d = r_1 \cdot I_d - \omega_1^* \cdot L_\sigma I_q - \omega_1 \cdot \dfrac{M}{L_2} \cdot \phi_{2q} \\[2ex] V_q = r_1 \cdot I_q + \omega_1^* \cdot L_\sigma I_d + \omega_1 \cdot \dfrac{M}{L_2} \cdot \phi_{2d} \end{array} \right]$$

(Math. 2)

In (Math. 2), r1 denotes primary resistance [Ω].

In (Math. 2), when an emphasis is placed on a q-axis voltage component, because (Math. 1) = (Math. 2) is established from the relationship (command voltage) = (output voltage), (Math. 3) can be obtained when the output ΔVq for the q-axis current control is organized.

$$\Delta V_q = r_1 \cdot (I_q - I_q^*) + L_\sigma(\omega_1^* \cdot I_d - \omega_r^* \cdot I_d^*) + \omega_r \cdot \dfrac{M}{L_2} \cdot \phi_{2d}$$

(Math. 3)

In (Math. 3), Id* = Id, and Iq* = Iq = 0 are established with an operation for d-axis and q-axis current control. Furthermore, because the speed command (ωr* is set to be an inverter frequency ω1, ω1 = ωr* is established and (Math. 3) is expressed as (Math. 4).

$$\Delta V_q \approx \omega_r \cdot \dfrac{M}{L_2} \cdot \phi_{2d}$$

(Math. 4)

In this case, if ($\omega$r is constant, because $\Delta$Vq is a primary delay response to the d-axis current command value Id*, the arithmetic operation of calculating the secondary time constant T2 can be performed using an excess response waveform of $\Delta$Vq.

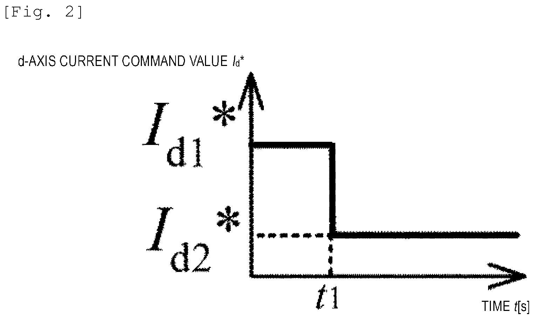

More precisely, if the d-axis current command value Id*, as illustrated in Fig. 2, is caused to be step-changed, the arithmetic operation of calculating the secondary time constant T2 from a response waveform of the output $\Delta$Vq for the q-axis current control unit can be performed.

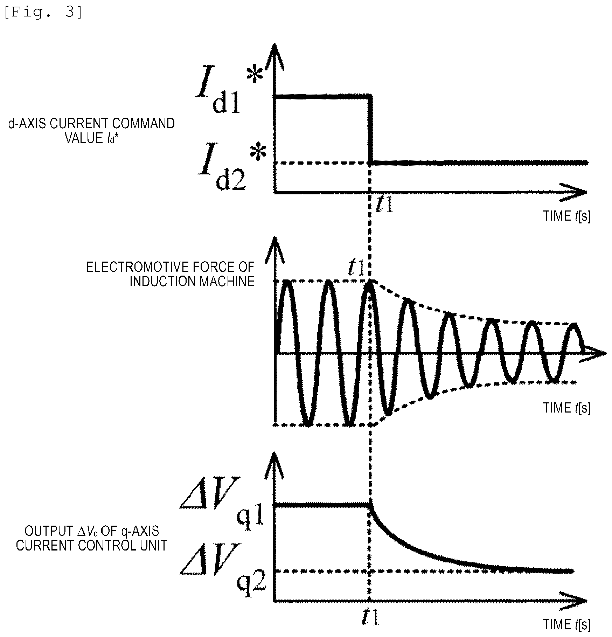

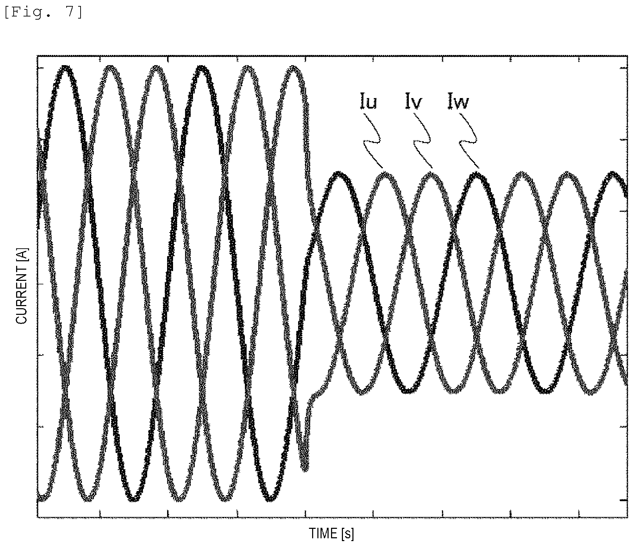

Fig. 3 illustrates the output $\Delta$Vq of the q-axis current control unit and an attenuation waveform of a U-phase voltage for the induction machine 1 when the d-axis current command value Id* is caused to be step-changed, in a case where Iq* is zero. Furthermore, Fig. 7 illustrates current in the U, V, and W phases before and after Id* is caused to be step-changed.

In Fig. 3, if the d-axis current command value Id* is caused to be step-changed from a step value Id1* to a step value Id2* at a point in time t1, an electromotive force of the induction machine 1 is attenuated from the point in time t1, and according to this, detection current Iu and detection current Iw in the current detector 3 are in a step response waveform and the output $\Delta$Vq of the q-axis current control unit also changes from $\Delta$Vq1 to $\Delta$Vq2. At this point, in a case where when Id2* is set to zero, because a speed change occurs, Id2* is set to a value other than zero, and where Id is set to be sufficiently higher than a rated current, because magnetic saturation occurs and the measurement precision of the secondary time constant T2 is decreased, Id1* and Id2* can be set according to a target motor without being fixed. An attenuation waveform of this $\Delta$Vq is retained, and an arithmetic operation of calculating a secondary time constant is performed using the least-squares method. A sum of squares is illustrated in (Math. 5). The secondary time constant T2 is obtained in such a manner that the sum of squares is minimized.

$$\Delta V_q = \sum_{i=1}^{n} \left( y_i - (a - b(1 - e^{-\frac{t}{T_2}})) \right)^2$$

(Math. 5)

In (Math. 5), yi is a measurement waveform, a is an output [V] of the q-axis current control before the step-changing, b is a coefficient, and n is the number of pieces of data.

It is noted that there are times when the secondary side of the induction machine is cut and damaged due to repetitive stress or the like due to high-speed rotation and an insulating film is damaged due to mechanical vibration. For this reason, electric conductors on the secondary side are short-circuited, or current is conducted to an iron core of the induction machine, and thus a secondary resistance value is sufficiently low or secondary resistance is sufficiently high. At this time, because the measures secondary time constant T2 is sufficiently small or large, a failure can be diagnosed using the secondary time constant. It is desirable that measurement of the secondary time constant is performed when the power conversion apparatus is activated to operate or when it stops operating.

As described above, according to the present embodiment, in a method of measuring a secondary time constant of an induction machine, which is used in a control device that controls a magnitude and a frequency of an output voltage for a power converter which drives the induction machine, the control device includes a d-axis current control unit and a q-axis current control unit that control output current for the power converter that drives the induction machine, according to a current command value on a d-axis that is a magnetic flux axis in a rotating magnetic field coordinate system and a current command value on a q-axis that is a torque axis in a rotating coordinate system, respectively, and a configuration is employed in which the current command value on the q-axis is set to zero and in which the secondary time constant for the induction machine is measured from an attenuation waveform of an output of the q-axis current control unit when the current command value on the d-axis is caused to be step-changed to other than zero, while the induction machine is in rotation.

Consequently, according to the present invention, the secondary time constant of the induction machine can be measured with high precision.

Second Embodiment

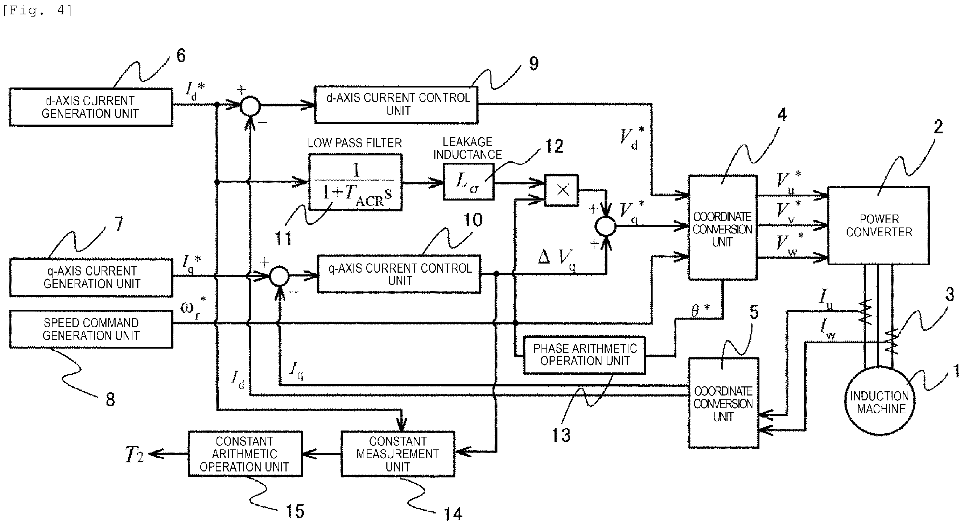

Fig. 4 is a diagram of a configuration of a power conversion apparatus according to the present embodiment. Fig. 4 results from adding a low pass filter 11 and a leakage inductance 12 to Fig. 1, and the other constituents are the same as those in Fig. 1.

The low pass filter 11 is a low pass filter that has an equivalent of the current control delay time constant TACR. Furthermore, the leakage inductance 12 outputs a constant L$\sigma$ of a leakage inductance.

In the first embodiment in Fig. 1, in a case where L$\sigma$ of the leakage inductance 12 is sufficiently low, the configuration is employed in which an arithmetic operation of calculating the voltage drop corresponding to the L$\sigma$ of the

leakage inductance 12 is not in advance performed. However, in the present embodiment, a configuration is employed in which the arithmetic operation of calculating the secondary time constant, as illustrated in Fig. 4, is performed considering a case where the $L\sigma$ of the leakage inductance 12 is sufficiently high.

As described above, according to the present embodiment, in a method of measuring a secondary time constant for an induction machine, which is used in a control device that controls a magnitude and a frequency of an output voltage for a power converter which drives the induction machine, the control device includes a d-axis current control unit and a q-axis current control unit that control output current for the power converter that drives the induction machine, according to a current command value on a d-axis that is a magnetic flux axis in a rotating magnetic field coordinate system and a current command value on a q-axis that is a torque axis in a rotating coordinate system, respectively, and a configuration is employed in which a voltage command value on the q-axis is generated by performing an arithmetic operation of calculating a non-interference term from the current command value on the d-axis, in which the current command value on the q-axis is set to zero, and in which the secondary time constant for the induction machine is measured from an attenuation waveform of an output of the q-axis current control unit when the current command value on the d-axis is caused to be step-changed to other than zero, while the induction machine is in rotation.

According, in the same manner as in the first embodiment, the secondary time constant of the induction machine can be measured with high precision.

Third Embodiment

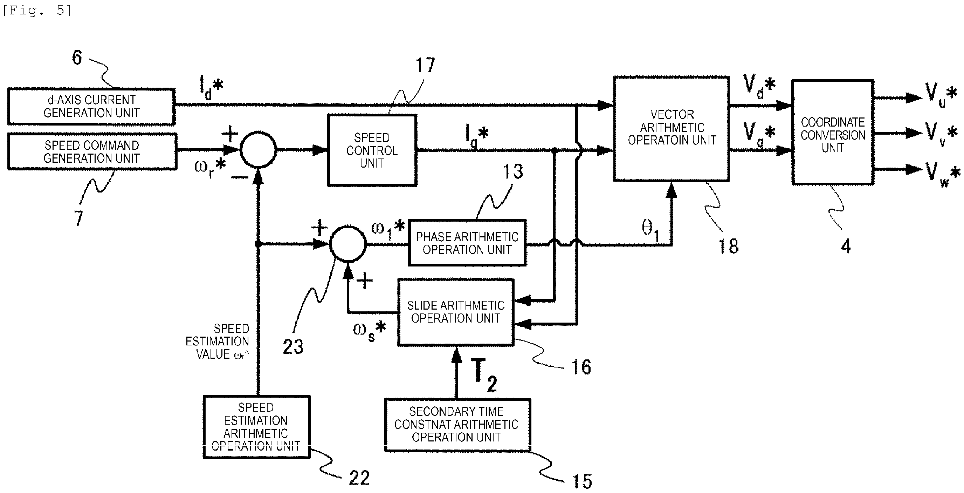

Fig. 5 is a diagram of a configuration of a power conversion apparatus according to the present embodiment. A configuration in a case where the secondary time constant T2 that is calculated by performing the arithmetic operation in the embodiment in Fig. 1 or 4 is utilized for vector control that does not use a sensor is illustrated.

Among constituent elements in Fig. 5, the coordinate conversion unit 4, the d-axis current generation unit 6, the q-axis current generation unit 7, the phase arithmetic operation unit 13, and the constant arithmetic operation unit 15 are the same as those in Fig. 1.

In Fig. 5, in the speed estimation arithmetic operation unit 22, a speed estimation value $\omega r^\wedge$ is output using (Math. 6) .

$$\omega_r^\wedge = \frac{1}{1+T_{obs}\cdot s}\left[\frac{V_q^* - \omega_1^*\cdot L_\sigma\cdot\frac{1}{1+T_{ACR}\cdot s}\cdot I_d^* - \left[(r_1+r_2') + L_\sigma\cdot s\right]I_{qc}}{\frac{M}{L_2}\phi_{2d}}\right] \qquad (Math.\ 6)$$

In (Math. 6), Tobs is a speed estimation delay time constant that is set for a disturbance observer, and $r_2'$ is a primary side conversion value of secondary resistance.

In a speed control unit 17, an arithmetic operation of calculating the current command value Iq* on the q-axis is performed in such a manner that the speed estimation value $\omega r^\wedge$ follows speed command value $\omega r^*$, and outputs a result of the arithmetic operation.

A slide arithmetic operation unit 16 sets the secondary time constant T2 that is calculated in the constant arithmetic operation unit (a secondary time constant arithmetic operation unit) 15, and using (Math. 7), outputs a slide angular frequency command value $\omega s^*$.

$$\omega_s^* = \frac{1}{T_2\cdot I_d^*}\cdot\frac{1}{1+T_{ACR}\cdot s}I_q^* \qquad (Math.\ 7)$$

Using (Math. 8), an addition unit 23 adds up the speed estimation value $\omega r^\wedge$ and the slide angular frequency command value $\omega s^*$ and outputs a primary frequency command value $\omega 1^*$.

$$\omega_1^* = \omega_r^\wedge + \omega_s^* \qquad (Math.\ 8)$$

The phase arithmetic operation unit 13 integrates the primary frequency command value $\omega 1^*$ and output a phase angle $\theta 1$.

The vector arithmetic operation unit 18 creates an output ΔVd of the d-axis current control unit and the output ΔVq of the q-axis current control unit from the current command values Id* and Iq* and the current detection values Id and Iq, and performs an arithmetic operation of adding up this voltage compensation value and a voltage reference value of vector control, which is expressed in (Math. 9).

$$\left[ \begin{array}{l} V_d^* = n \cdot I_d^* - \omega_1^* \cdot L_\sigma \cdot \dfrac{1}{1 + T_{ACR} \cdot S} I_q^* + \Delta V_d \\[4mm] V_q^* = n \cdot I_q^* + \omega_1^* \cdot L_\sigma \cdot \dfrac{1}{1 + T_{ACR} \cdot S} I_d^* + \omega_1^* \cdot \dfrac{M}{L_2} \cdot \phi_{2d} + \Delta V_q \end{array} \right]$$

(Math. 9)

As described above, according to the present embodiment, in a method of controlling a speed of an induction machine that uses the secondary time constant which is obtained with the method of measuring the secondary time constant for the induction machine, a control unit includes a speed estimation unit that estimates a speed estimation value, and a configuration is employed in which an arithmetic operation of calculating a slide frequency estimation value for an electric motor from a secondary time constant, a q-axis current command value, and a d-axis current command value is performed, in which an arithmetic operation of adding a slide frequency estimation value to a speed estimation value that is estimated in a speed estimation unit is performed, and in which a primary frequency for the control device is controlled according to the resulting addition value.

Accordingly, the control of the speed of the induction machine can be performed with high precision.

Fourth Embodiment

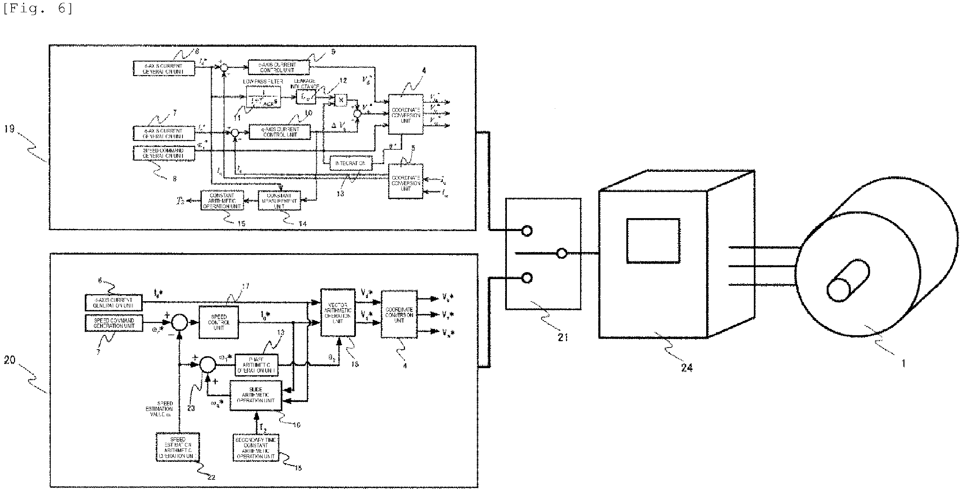

Fig. 6 is a diagram of a configuration of a power conversion apparatus according to the present embodiment. When it comes to the present embodiment, the present embodiment is applied to an induction machine drive system.

Among constituent elements in Fig, 6, a tuning mode 19 has the same configuration as in Fig. 4, and an operating mode 20 is the same as that in Fig. 5.

In Fig. 6, switching between the tuning mode 19 and the operating mode 20 can be performed in a switch 21 . In the tuning mode 19, after performing the arithmetic operation of calculating the secondary time constant T2, the operating mode 20 is selected and power is supplied from a general-purpose inverter 24 to the induction machine 1.

If the present embodiment is applied to the induction motor drive system, high-precision speed control characteristics can be realized.

The embodiments are described above, but the present invention is not limited to the embodiments described above and includes various modification examples. Furthermore, no limitation to the including of all configurations described is necessarily imposed. Furthermore, it is possible that one or several configurations of a certain embodiment are replaced with a configuration of a different embodiment, and it is also possible that the configuration of the different embodiment is added to the configuration of the certain embodiment. Furthermore, it is also possible that a configuration of a different embodiment is added to, is deleted from, and is replaced with one or several configurations of each embodiment.

Reference Signs List

1      INDUCTION MACHINE
2      POWER CONVERTER
3      CURRENT DETECTOR
4      COORDINATE CONVERSION UNIT
5      COORDINATE CONVERSION UNIT
6      d-AXIS CURRENT GENERATION UNIT
7      q-AXIS CURRENT GENERATION UNIT
8      SPEED COMMAND GENERATION UNIT
9      d-AXIS CURRENT CONTROL UNIT
10     q-AXIS CURRENT CONTROL UNIT
11     LOW PASS FILTER

| 12 | LEAKAGE INDUCTANCE |
| 13 | PHASE ARITHMETIC OPERATION UNIT |
| 14 | CONSTANT MEASUREMENT UNIT |
| 15 | CONSTANT ARITHMETIC OPERATION UNIT |
| 16 | SLIDE ARITHMETIC OPERATION UNIT |
| 17 | SPEED UNIT |
| 18 | VECTOR ARITHMETIC OPERATION UNIT |
| 19 | TUNING MODE |
| 20 | OPERATING MODE |
| 21 | SWITCH |
| 22 | SPEED ESTIMATION ARITHMETIC OPERATION UNIT |
| 23 | ADDITION UNIT |
| 24 | ALL-PURPOSE INVERTER |
| Id* | d-AXIS CURRENT COMMAND VALUE |
| Iq* | q-AXIS CURRENT COMMAND VALUE |
| $\omega r^*$ | SPEED COMMAND VALUE |
| $\omega r^\wedge$ | SPEED ESTIMATION VALUE |
| $\omega s^*$ | SLIDE ANGULAR FREQUENCY COMMAND VALUE |
| $\omega 1^*$ | PRIMARY FREQUENCY COMMAND VALUE |
| $\theta^*$ | CONTROL PHASE |
| Vd* | d-AXIS VOLTAGE COMMAND VALUE |
| Vq* | q-AXIS VOLTAGE COMMAND VALUE |
| $\Delta$Vd | OUTPUT FOR d-AXIS CURRENT CONTROL |
| $\Delta$Vq | OUTPUT FOR q-AXIS CURRENT CONTROL |

**Claims**

1. A method of controlling a speed of an induction machine (1) that uses a secondary time constant (T2) which is obtained with a method of measuring the secondary time constant for an induction machine, used in a control device that controls a magnitude and a frequency of an output voltage for a power converter which drives the induction machine,
   wherein the control device includes a d-axis current control unit (9) and a q-axis current control unit (10) that control output current for the power converter (2) that drives the induction machine, according to a current command value on a d-axis that is a magnetic flux axis in a rotating magnetic field coordinate system and a current command value on a q-axis that is a torque axis in a rotating coordinate system, respectively,
   wherein the current command value on the q-axis is set to zero, and the secondary time constant for the induction machine is measured from an attenuation waveform of an output of the q-axis current control unit when the current command value on the d-axis is caused to be step-changed to other than zero, while the induction machine is in rotation, **characterized in that** the control device includes a speed estimation unit (22) that estimates a speed estimation value, and
   wherein an arithmetic operation of calculating a slide frequency estimation value ($\omega s^*$) for an electric motor from the secondary time constant (T2), the q-axis current command value (Iq*), and the d-axis current command value (Id*) is performed, an arithmetic operation of adding the slide frequency estimation value ($\omega s^*$) to a speed estimation value ($\omega r^\wedge$) that is estimated in the speed estimation unit is performed, a primary frequency for the control device is controlled according to the resulting addition value ($\omega 1^*$) by integrating the primary frequency command value ($\omega 1^*$) to output a phase angle ($\theta 1$), and an arithmetic operation performed by a vector arithmetic operation unit (18) employing the phase angle ($\theta 1$).

2. The method according to claim 1,
   wherein the secondary time constant is measured using a least-squares method.

3. The method according to claim 1,
   wherein the secondary time constant is measured when the control device is activated to operate or stops operating.

4. The method according to claim 1,
   wherein a step value of a current command value on the d-axis, which is caused to be step-changed is able to be arbitrarily set.

**5.** The method according to claim 1,
wherein a voltage command value on the q-axis is generated by performing an arithmetic operation of calculating a non-interference term from the current command value on the d-axis .

**6.** The method according to claim 1,
wherein the secondary time constant for the induction machine is obtained in a tuning mode prior to an operating mode, and a primary frequency for the control device is controlled in the operating mode.

**7.** A power conversion apparatus of an induction machine (1) that is made up of a power converter (2) that drives the induction machine, and a control device which controls a magnitude and a frequency of an output voltage for the power convertor,
wherein the control device includes

a d-axis current control unit (9) and a q-axis current control unit (10) that control output current for the power converter that drives the induction machine, according to a current command value on a d-axis that is a magnetic flux axis in a rotating magnetic field coordinate system and a current command value on a q-axis that is a torque axis in a rotating coordinate system, respectively,
a constant measurement unit (14) that retains an output waveform of the q-axis current control unit,
a constant arithmetic operation unit (15) that performs an arithmetic operation of calculating a constant,
a control unit that controls these units, and
a speed estimation unit (22) that estimates a speed estimation value,

wherein the control unit sets the current command value on the q-axis to zero, and causes the constant arithmetic operation unit to measure a secondary time constant for the induction machine from an attenuation waveform of an output of the q-axis current control unit, which is retained in the constant measurement unit when the current command value on the d-axis is caused to be step-changed to other than zero, while the induction machine is in rotation, **characterized in that** the control unit performs an arithmetic operation of calculating a slide frequency estimation value ($\omega$s*) of the induction machine from the secondary time constant (T2), the current command value on the q-axis (Iq*), and the current command value on the d-axis(Id*), performs an arithmetic operation of adding the slide frequency estimation value ($\omega$s*) to the speed estimation value ($\omega$r^) that is estimated in the speed estimation unit, controls a primary frequency for the power conversion apparatus according to the resulting addition value ($\omega$1*) by integrating the primary frequency command value ($\omega$1*) to output a phase angle ($\theta$1), and an arithmetic operation, performed by a vector arithmetic operation unit (18), employing the phase angle ($\theta$1).

**8.** The power conversion apparatus according to claim 7,
wherein the control unit measures the secondary time constant when the power conversion apparatus is activated to operate or stops operating.

**9.** The power conversion apparatus according to claim 7,
wherein the control unit is able to arbitrarily set a step value of the current command value on the d-axis which is caused to be step-changed.

**10.** The power conversion apparatus according to claim 7,
wherein diagnosis of a failure on the secondary side of the induction machine from the secondary time constant is performed.

**11.** The power conversion apparatus according to claim 7,
wherein the control unit generates a q-axis voltage command value by performing an arithmetic operation of calculating a non-interference term from the current command value on the d-axis .

**12.** The power conversion apparatus according to claim 7,
wherein the secondary time constant is acquired in a tuning mode prior to an operating mode, and the primary frequency for the power conversion apparatus is controlled in the operating mode.

**Patentansprüche**

**1.** Verfahren zum Steuern einer Drehzahl einer Induktionsmaschine (1), das eine sekundäre Zeitkonstante (T2) verwendet, die mit einem Verfahren zum Messen der sekundären Zeitkonstante für eine Induktionsmaschine erhalten wird, und in einer Steuervorrichtung verwendet wird, die eine Höhe und Frequenz einer Ausgangsspannung für einen Leistungswandler steuert, der die Induktionsmaschine ansteuert,

wobei die Steuervorrichtung eine d-Achsen-Stromsteuereinheit (9) und eine q-Achsen-Stromsteuereinheit (10) umfasst, die einen Ausgangsstrom für den Leistungswandler (2) steuern, der die Induktionsmaschine ansteuert, und zwar gemäß einem Strombefehlswert auf einer d-Achse, die eine Magnetflussachse in einem rotierenden Magnetfeld-Koordinatensystem ist, bzw. einem Strombefehlswert auf einer q-Achse, die eine Drehmomentachse in einem rotierenden Koordinatensystem ist,

wobei der Strombefehlswert auf der q-Achse auf null eingestellt ist und die sekundäre Zeitkonstante für die Induktionsmaschine aus einer Dämpfungswellenform einer Ausgabe der q-Achsen-Stromsteuereinheit gemessen wird, wenn bewirkt wird, dass der Strombefehlswert auf der d-Achse schrittweise auf nicht null geändert wird, während die Induktionsmaschine sich dreht,

**dadurch gekennzeichnet, dass** die Steuervorrichtung eine Drehzahlschätzeinheit (22) umfasst, die einen Drehzahlschätzwert schätzt, und

wobei eine arithmetische Operation der Berechnung eines Gleitfrequenzschätzwerts ($\omega s^*$) für einen Elektromotor aus der sekundären Zeitkonstante (T2), dem q-Achsen-Strombefehlswert (Iq*) und dem d-Achsen-Strombefehlswert (Id*) ausgeführt wird, wobei eine arithmetische Operation des Addierens des Gleitfrequenzschätzwerts ($\omega s^*$) zu einem Drehzahlschätzwert ($\omega r^\wedge$), der in der Drehzahlschätzeinheit geschätzt wird, ausgeführt wird, wobei eine Primärfrequenz für die Steuervorrichtung gemäß dem resultierenden Additionswert ($\omega 1^*$) durch Integrieren des Primärfrequenzbefehlswerts ($\omega 1^*$) gesteuert wird, um einen Phasenwinkel ($\theta 1$) auszugeben, und wobei eine arithmetische Operation, die durch eine arithmetische Vektoroperationseinheit (18) ausgeführt wird, die den Phasenwinkel ($\theta 1$) einsetzt, ausgeführt wird.

2. Verfahren nach Anspruch 1,
wobei die sekundäre Zeitkonstante unter Verwendung einer Methode der kleinsten Quadrate gemessen wird.

3. Verfahren nach Anspruch 1,
wobei die sekundäre Zeitkonstante bei Aktivierung oder Beendigung des Betriebs der Steuervorrichtung gemessen wird.

4. Verfahren nach Anspruch 1,
wobei ein Schrittwert eines Strombefehlswerts auf der d-Achse, der eine schrittweise Änderung erfährt, auf der d-Achse beliebig eingestellt werden kann.

5. Verfahren nach Anspruch 1,
wobei ein Spannungsbefehlswert auf der q-Achse erzeugt wird, indem eine arithmetische Operation des Berechnens eines Nichtbeeinflussungsterms aus dem Strombefehlswert auf der d-Achse ausgeführt wird.

6. Verfahren nach Anspruch 1,
wobei die sekundäre Zeitkonstante für die Induktionsmaschine in einem Abstimmungsmodus vor einem Betriebsmodus erhalten wird und eine Primärfrequenz für die Steuervorrichtung im Betriebsmodus gesteuert wird.

7. Leistungswandlungsvorrichtung einer Induktionsmaschine (1), die aus einem Leistungswandler (2), der die Induktionsmaschine ansteuert, und einer Steuervorrichtung, die eine Höhe und Frequenz einer Ausgangsspannung für den Leistungswandler steuert, besteht,
wobei die Steuervorrichtung Folgendes umfasst:

eine d-Achsen-Stromsteuereinheit (9) und eine q-Achsen-Stromsteuereinheit (10), die einen Ausgangsstrom für den Leistungswandler steuern, der die Induktionsmaschine ansteuert, und zwar gemäß einem Strombefehlswert auf einer d-Achse, die eine Magnetflussachse in einem rotierenden Magnetfeld-Koordinatensystem ist, bzw. einem Strombefehlswert auf einer q-Achse, die eine Drehmomentachse in einem rotierenden Koordinatensystem ist,

eine Konstant-Messeinheit (14), die eine Ausgangswellenform der q-Achsen-Stromsteuereinheit beibehält,

eine arithmetische Konstanten-Operationseinheit (15), die eine arithmetische Operation zur Berechnung einer Konstante ausführt;

eine Steuereinheit, die diese Einheiten steuert, und

eine Drehzahlschätzeinheit (22), die einen Drehzahlschätzwert schätzt,

wobei die Steuereinheit den Strombefehlswert auf der q-Achse auf null einstellt und bewirkt, dass die arithmetische Konstanten-Operationseinheit eine sekundäre Zeitkonstante für die Induktionsmaschine aus einer Dämpfungswellenform einer Ausgabe der q-Achsen-Stromsteuereinheit misst, die in der Konstant-Messeinheit beibehalten wird, wenn bewirkt wird, dass der Strombefehlswert auf der d-Achse schrittweise auf nicht null geändert wird, während die Induktionsmaschine sich dreht,

**dadurch gekennzeichnet, dass** die Steuereinheit eine arithmetische Operation der Berechnung eines Gleitfrequenzschätzwerts (ωs*) der Induktionsmaschine aus der sekundären Zeitkonstante (T2), dem Strombefehlswert auf der q-Achse (Iq*) und dem Strombefehlswert auf der d-Achse (Id*) ausführt, eine arithmetische Operation des Addierens des Gleitfrequenzschätzwerts (ωs*) zu dem Drehzahlschätzwert (ωr^), der in der Drehzahlschätzeinheit geschätzt wird, ausführt, eine Primärfrequenz für die Leistungswandlungsvorrichtung gemäß dem resultierenden Additionswert (ω1*) durch Integrieren des Primärfrequenzbefehlswerts (ω1*) steuert, um einen Phasenwinkel (θ1) auszugeben und eine arithmetische Operation, die durch eine arithmetische Vektoroperationseinheit (18) ausgeführt wird, die den Phasenwinkel (θ1) einsetzt, ausführt.

8. Leistungswandlungsvorrichtung nach Anspruch 7,
wobei die Steuereinheit die sekundäre Zeitkonstante bei Aktivierung oder Beendigung des Betriebs der Leistungswandlungsvorrichtung misst.

9. Leistungswandlungsvorrichtung nach Anspruch 7,
wobei die Steuereinheit in der Lage ist, einen Schrittwert des Strombefehlswerts auf der d-Achse, dessen Änderung schrittweise bewirkt wird, beliebig einzustellen.

10. Leistungswandlungsvorrichtung nach Anspruch 7,
wobei die Diagnose eines Versagens auf der Sekundärseite der Induktionsmaschine aus der sekundären Zeitkonstante ausgeführt wird.

11. Leistungswandlungsvorrichtung nach Anspruch 7,
wobei die Steuereinheit durch Ausführen einer arithmetischen Operation zur Berechnung eines Nichbeeinflussungsterms aus dem Strombefehlswert auf der d-Achse einen q-Achsen-Spannungsbefehlswert erzeugt.

12. Leistungswandlungsvorrichtung nach Anspruch 7,
wobei die sekundäre Zeitkonstante in einem Abstimmungsmodus vor einem Betriebsmodus erhalten wird und die Primärfrequenz für die Leistungswandlungsvorrichtung im Betriebsmodus gesteuert wird.

**Revendications**

1. Procédé de commande de la vitesse d'une machine à induction (1) qui utilise une constante de temps secondaire (T2) qui est obtenue par un procédé de mesure de la constante de temps secondaire d'une machine à induction, utilisé dans un dispositif de commande qui commande une amplitude et une fréquence d'une tension de sortie pour un convertisseur de puissance qui entraîne la machine à induction ;
dans lequel le dispositif de commande inclut une unité de commande de courant d'axe « d » (9) et une unité de commande de courant d'axe « q » (10) qui commandent un courant de sortie pour le convertisseur de puissance (2) qui entraîne la machine à induction, selon une valeur de commande de courant sur un axe « d » qui correspond à un axe de flux magnétique dans un système de coordonnées de champ magnétique rotatif, et une valeur de commande de courant sur un axe « q » qui correspond à un axe de couple dans un système de coordonnées rotatif, respectivement ;
dans lequel la valeur de commande de courant sur l'axe « q » est réglée sur zéro, et la constante de temps secondaire pour la machine à induction est mesurée à partir d'une forme d'onde d'atténuation d'une sortie de l'unité de commande de courant d'axe « q » lorsque la valeur de commande de courant sur l'axe « d » est amenée à être modifiée progressivement en une valeur distincte de zéro, tandis que la machine à induction est en rotation, **caractérisé en ce que** le dispositif de commande comprend une unité d'estimation de vitesse (22) qui estime une valeur d'estimation de vitesse ; et
dans lequel une opération arithmétique consistant à calculer une valeur d'estimation de fréquence de glissement (ωs*) pour un moteur électrique à partir de la constante de temps secondaire (T2), de la valeur de commande de courant d'axe « q » (Iq*) et de la valeur de commande de courant d'axe « d » (Id*), est mise en œuvre, une opération arithmétique consistant à ajouter la valeur d'estimation de fréquence de glissement (ws*), à une valeur d'estimation de vitesse (ωr^) qui est estimée dans l'unité d'estimation de vitesse, est mise en œuvre, une fréquence primaire pour le dispositif de commande est commandée selon la valeur d'addition résultante (ω1*), en intégrant la valeur de commande de fréquence primaire ($\omega1^*$), en vue de fournir en sortie un angle de phase ($\theta1$), et une opération arithmétique, mise en œuvre par une unité d'opération arithmétique vectorielle (18), employant l'angle de phase ($\theta1$).

2. Procédé selon la revendication 1,
dans lequel la constante de temps secondaire est mesurée en faisant appel à un procédé des moindres carrés.

3. Procédé selon la revendication 1,
dans lequel la constante de temps secondaire est mesurée lorsque le dispositif de commande est activé pour fonctionner ou lorsqu'il interrompt le fonctionnement.

4. Procédé selon la revendication 1,
dans lequel une valeur de pas d'une valeur de commande de courant sur l'axe « d », qui est amenée à être modifiée progressivement, peut être réglée arbitrairement.

5. Procédé selon la revendication 1,
dans lequel une valeur de commande de tension sur l'axe « q » est générée en mettant en œuvre une opération arithmétique consistant à calculer un terme de non-interférence à partir de la valeur de commande de courant sur l'axe « d ».

6. Procédé selon la revendication 1,
dans lequel la constante de temps secondaire pour la machine à induction est obtenue dans un mode de syntonisation avant un mode de fonctionnement, et une fréquence primaire pour le dispositif de commande est commandée dans le mode de fonctionnement.

7. Appareil de conversion de puissance d'une machine à induction (1) qui est constituée d'un convertisseur de puissance (2) qui entraîne la machine à induction, et d'un dispositif de commande qui commande une amplitude et une fréquence d'une tension de sortie pour le convertisseur de puissance,
dans lequel le dispositif de commande inclut :

une unité de commande de courant d'axe « d » (9) et une unité de commande de courant d'axe « q » (10) qui commandent un courant de sortie pour le convertisseur de puissance qui entraîne la machine à induction, selon une valeur de commande de courant sur un axe « d » qui correspond à un axe de flux magnétique dans un système de coordonnées de champ magnétique rotatif, et une valeur de commande de courant sur un axe « q » qui correspond à un axe de couple dans un système de coordonnées rotatif, respectivement ;
une unité de mesure de constante (14) qui conserve une forme d'onde de sortie de l'unité de commande de courant d'axe « q » ;
une unité d'opération arithmétique de calcul de constante (15) qui met en œuvre une opération arithmétique consistant à calculer une constante ;
une unité de commande qui commande ces unités ; et
une unité d'estimation de vitesse (22) qui estime une valeur d'estimation de vitesse ;

dans lequel l'unité de commande règle la valeur de commande de courant sur l'axe « q » sur zéro, et amène l'unité d'opération arithmétique de calcul de constante à mesurer une constante de temps secondaire pour la machine à induction, à partir d'une forme d'onde d'atténuation d'une sortie de l'unité de commande de courant d'axe « q », qui est conservée dans l'unité de mesure de constante lorsque la valeur de commande de courant sur l'axe « d » est amenée à être modifiée progressivement en une valeur distincte de zéro, tandis que la machine à induction est en rotation, **caractérisé en ce que** l'unité de commande met en œuvre une opération arithmétique consistant à calculer une valeur d'estimation de fréquence de glissement ($\omega s^*$) de la machine à induction à partir de la constante de temps secondaire (T2), de la valeur de commande de courant sur l'axe « q » (Iq*), et de la valeur de commande de courant sur l'axe « d » (Id*), met en œuvre une opération arithmétique consistant à ajouter la valeur d'estimation de fréquence de glissement ($\omega s^*$) à la valeur d'estimation de vitesse ($\omega r^\wedge$) qui est estimée dans l'unité d'estimation de vitesse, commande une fréquence primaire pour l'appareil de conversion de puissance selon la valeur d'addition résultante ($\omega1^*$), en intégrant la valeur de commande de fréquence primaire ($\omega1^*$) en vue de fournir en sortie un angle de phase ($\theta1$), et une opération arithmétique, mise en œuvre par une unité d'opération arithmétique vectorielle (18), employant l'angle de phase ($\theta1$).

8. Appareil de conversion de puissance selon la revendication 7,
dans lequel l'unité de commande mesure la constante de temps secondaire lorsque l'appareil de conversion de puissance est activé pour fonctionner ou lorsqu'il interrompt le fonctionnement.

9. Appareil de conversion de puissance selon la revendication 7,
dans lequel l'unité de commande est apte à régler arbitrairement une valeur de pas de la valeur de commande de courant sur l'axe « d » qui est amenée à être modifiée progressivement.

10. Appareil de conversion de puissance selon la revendication 7,
dans lequel un diagnostic d'une défaillance, sur le côté secondaire de la machine à induction, à partir de la constante de temps secondaire, est mis en œuvre.

11. Appareil de conversion de puissance selon la revendication 7,
dans lequel l'unité de commande génère une valeur de commande de tension d'axe « q » en mettant en œuvre une opération arithmétique consistant à calculer un terme de non-interférence à partir de la valeur de commande de courant sur l'axe « d ».

12. Appareil de conversion de puissance selon la revendication 7,
dans lequel la constante de temps secondaire est acquise dans un mode de syntonisation avant un mode de fonctionnement, et la fréquence primaire pour l'appareil de conversion de puissance est commandée dans le mode de fonctionnement.

[Fig. 1]

[Fig. 2]

d-AXIS CURRENT COMMAND VALUE $I_d*$

[Fig. 3]

d-AXIS CURRENT COMMAND
VALUE $I_d{}^*$

$I_{d1}{}^*$

$I_{d2}{}^*$

$t1$

TIME $t$[s]

ELECTROMOTIVE FORCE OF
INDUCTION MACHINE

$t1$

TIME $t$[s]

OUTPUT $\Delta V_q$ OF q-AXIS
CURRENT CONTROL UNIT

$\Delta V_{q1}$

$\Delta V_{q2}$

$t1$

TIME $t$[s]

[Fig. 4]

[Fig. 5]

EP 3 309 953 B1

[Fig. 6]

[Fig. 7]

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6265607 A
- JP 2001268997 A
- JP H07298699 A
- JP 2010011638 A